# EUROPEAN PATENT APPLICATION

(11) **EP 3 202 480 A1**
(43) Date of publication of application: **09.08.2017**
(21) Application number: 15847805.7
(22) Date of filing: 29.09.2015
(51) Int. Cl.: B01D 39/20, B01D 46/00, B28B 3/20, C04B 38/06, F01N 3/022

(54) **METHOD FOR PRODUCING HONEYCOMB FILTER**

(30) Priority: 29.09.2014 JP 2014198666
(71) Applicant: Ibiden Co., Ltd, Ogaki-shi, Gifu 503-8604 (JP)
(72) Inventor: HASEGAWA Jun, Ibi-gun Gifu 501-0695 (JP); OGYU Kazutake, Ibi-gun Gifu 501-0695 (JP)
(74) Representative: Hoefer & Partner Patentanwälte mbB
(86) International application number: PCT/JP2015/077422
(87) International publication number: WO 2016/052457

(57) **Abstract**

The present invention provides a method for producing a honeycomb filter in which steps such as a degreasing step can be easily controlled, the degreasing step and a firing step can be performed in one furnace, and the honeycomb filter can be efficiently produced. The method for producing a honeycomb filter of the present invention includes a molded body raw material preparing step of mixing silicon carbide powder, organic additives at least including an organic binder, and silica to prepare a raw material composition as a molded body raw material; a molded body producing step of extruding the prepared molded body raw material into a honeycomb molded body; a degreasing step of degreasing the produced honeycomb molded body; and a firing step of firing the degreased honeycomb molded body, wherein the degreasing step is performed in a completely inert gas atmosphere.

## Description

### TECHNICAL FIELD

The present invention relates to a method for producing a honeycomb filter.

### BACKGROUND ART

Particulates (hereinafter also referred to as PM) such as soot and other toxic components contained in exhaust gas emitted from internal combustion engines of vehicles such as buses and trucks, construction machinery, and the like cause damage to the environment and human bodies, which has been a problem.

Thus, as a honeycomb filter to purify exhaust gas by capturing PM, there has been proposed a honeycomb filter which is formed of a ceramic block including multiple honeycomb fired bodies that are combined with each other in which the honeycomb fired bodies each include a large number of cells longitudinally arranged in parallel to one another across porous cell partition walls.

Patent Literature 1 discloses a method for producing such a honeycomb filter. In this method, raw materials such as silicon carbide powder and an organic binder are mixed to obtain a raw material composition as a molded body raw material, and the molded body raw material is extruded into a honeycomb molded body. Subsequently, the honeycomb molded body is degreased and fired into a honeycomb fired body, and multiple honeycomb fired bodies are bonded together into a ceramic block. The ceramic block is cut, and a peripheral coat layer is formed thereon. Thus, a honeycomb filter is produced.

When producing a honeycomb filter having cell partition walls made of porous silicon carbide, it is usually necessary to add a pore-forming agent, and thus the raw material composition contains organic additives including an organic pore-forming agent, in addition to the organic binder.

### CITATION LIST

### Patent Literature

Patent Literature 1: JP-A 2007-230855

### SUMMARY OF INVENTION

### - Technical Problem

However, problems attributable to the organic materials contained in the raw material composition may occur, for example, mainly in steps such as the degreasing step. Specifically, in conventional methods for producing a honeycomb filter, a honeycomb molded body is heated in an oxidizing atmosphere in the degreasing step so as to decompose and remove the organic materials contained in the raw material composition. However, since the organic materials generate heat during oxidative decomposition, the honeycomb molded body during or after degreasing thermally expands, and the thermal stress caused by the thermal expansion affects the honeycomb molded body during or after degreasing.

To produce a honeycomb filter having a high porosity entails an increase in the porosity of a degreased body. Thus, the degreased honeycomb molded body tends to have a poor physical strength. When the temperature changes rapidly, the degreased honeycomb molded body cannot withstand rapid expansion or contraction and becomes easily breakable.

In order to avoid such a situation, strict temperature control and strict oxygen concentration control are necessary in the degreasing step, which unfortunately reduces the production efficiency.

The present invention is made to solve the above problems and aims to provide a method for producing a honeycomb filter in which steps such as the degreasing step can be easily controlled, the degreasing step and the firing step can be performed in one furnace, and the honeycomb filter can be efficiently produced.

### - Solution to Problem

To achieve the object described above, the method for producing a honeycomb filter of the present invention includes a molded body raw material preparing step of mixing silicon carbide powder, organic additives at least including an organic binder, and silica to prepare a raw material composition as a molded body raw material; a molded body producing step of extruding the prepared molded body raw material into a honeycomb molded body; a degreasing step of degreasing the produced honeycomb molded body; and a firing step of firing the degreased honeycomb molded body, wherein the degreasing step is performed in a completely inert gas atmosphere.

In the method for producing a honeycomb filter of the present invention, the degreasing step is performed in a completely inert gas atmosphere. Thus, the organic additives including an organic binder are less likely to be oxidatively decomposed and are mainly pyrolyzed. Consequently, a large amount of heat is not likely to be generated, the thermal stress acting on the honeycomb molded body during or after degreasing is small, and the degreased body is less susceptible to problems such as breakage. Thus, the degreasing step can be easily controlled, and the honeycomb filter can be efficiently produced.

In the method for producing a honeycomb filter of the present invention, preferably, the firing step is performed in a completely inert gas atmosphere.

As described above, in the method for producing a honeycomb filter of the present invention, the firing step can be performed in an inert gas atmosphere, the degreasing step and the firing step can be performed in one furnace, enabling a significant reduction in the required amount of heat. Thus, the honeycomb filter can be produced at lower cost. Moreover, there is no need to take out the degreased body from a degreasing furnace for cooling and then to carry it to a firing furnace. Thus, the process can be simplified, the risk of breaking the honeycomb molded body during transportation is eliminated, and the honeycomb filter can be efficiently produced.

In the method for producing a honeycomb filter of the present invention, preferably, the molar ratio of carbon to silica (carbon/silica) in the degreased honeycomb molded body is 1 to 3.

When the molar ratio of carbon to silica (carbon/silica) in the degreased honeycomb molded body is 1 to 3, the silica in the honeycomb molded body reacts with residual carbon resulting from decomposition of the materials such as an organic binder in the honeycomb molded body to form silicon carbide in the firing step, and thus there is hardly any residual silica or residual carbon in the resulting fired body. Therefore, it is possible to produce a porous silicon carbide fired body having good characteristics, and the resulting honeycomb filter can exhibit sufficient performance as a honeycomb filter.

In the method for producing a honeycomb filter of the present invention, preferably, the degreasing step and the firing step are performed in one batch furnace.

As described above, in the method for producing a honeycomb filter of the present invention, the degreasing step and the firing step can be performed in an inert gas atmosphere, so that the degreasing step and the firing step can be continuously performed in one batch furnace, and the honeycomb filter can be produced more efficiently at lower cost.

In the method for producing a honeycomb filter of the present invention, preferably, the degreasing step and the firing step are performed in one continuous furnace, and the continuous furnace is provided with a degreasing area and a firing area.

As described above, in the method for producing a honeycomb filter of the present invention, the degreasing step and the firing step can be performed in an inert gas atmosphere, so that the degreasing step and the firing step can be performed in one continuous furnace provided with the degreasing area and the firing area, and the degreasing step and the firing step can be performed while honeycomb molded bodies are continuously supplied to and delivered from the continuous furnace. Thus, the honeycomb filter can be produced more efficiently at lower cost.

In the method for producing a honeycomb filter of the present invention, preferably, the organic additives further include an organic pore-forming agent.

Conventionally, the presence of a pore-forming agent has been one of the causes for breakage of the degreased body because the pore-forming agent generates heat upon oxidative decomposition. However, in the method for producing a honeycomb filter of the present invention, even when the organic additives further include an organic pore-forming agent, since the organic pore-forming agent is decomposed in an inert gas atmosphere, the amount of heat generation upon decomposition is small and the degreased body is less susceptible to breakage. In addition, the reaction of the residual carbon with the silica can prevent the carbon from remaining in the honeycomb fired body that constitutes the honeycomb filter.

### BRIEF DESCRIPTION OF DRAWINGS

Fig. 1(a) is a schematic perspective view of a honeycomb molded body in which one end of each cell is plugged; and Fig. 1(b) is a cross-sectional view of the honeycomb molded body of Fig. 1(a) taken along line A-A.
Fig. 2 is a schematic vertical sectional view of a continuous heating furnace according to the present invention, which is cut in a vertical plane along the longitudinal direction thereof.
Fig. 3 is a schematic cross-sectional view of the continuous heating furnace according to the present invention, which is cut in a plane perpendicular to the longitudinal direction thereof.
Fig. 4 is a perspective view of a honeycomb filter produced by the method for producing a honeycomb filter of the present invention.
Fig. 5(a) is a perspective view of the honeycomb fired body that constitutes the honeycomb filter of Fig. 4; and Fig. 5(b) is a cross-sectional view of the honeycomb fired body of Fig. 5(a) taken along line B-B.

### DESCRIPTION OF EMBODIMENTS

The method for producing a honeycomb filter of the present invention is described below.

The method for producing a honeycomb filter of the present invention includes a molded body raw material preparing step of mixing silicon carbide powder, organic additives at least including an organic binder, and silica to prepare a raw material composition as a molded body raw material; a molded body producing step of extruding the prepared molded body raw material into a honeycomb molded body; a degreasing step of degreasing the produced honeycomb molded body; and a firing step of firing the degreased honeycomb molded body, wherein the degreasing step is performed in a completely inert gas atmosphere.

The method for producing a honeycomb filter of the present invention includes a molded body raw material preparing step, a molded body producing step, a degreasing step, and a firing step. The method for producing a honeycomb filter including the above steps is described below for each step.

### (1) Molded body raw material preparing step

In the molded body raw material preparing step, silicon carbide powder, organic additives at least including an organic binder, and silica are mixed to prepare a raw material composition as a molded body raw material.

Properties such as particle size of the silicon carbide powder are not particularly limited. Yet, it is preferred to use two types of silicon carbide powder having different average particle sizes. For example, two types of silicon carbide powder having different average particle sizes may be a combination of silicon carbide powder having an average particle size of 0.3 to 50 µm and silicon carbide having an average particle size of about 0.1 to 1.0 µm. Such a combination facilitates the production of a porous silicon carbide fired body.

Examples of the organic additives include a liquid dispersion medium, a plasticizer, and a lubricant, in addition to the organic binder.

Examples of the organic binder include methylcellulose, carboxymethyl cellulose, hydroxyethyl cellulose, polyethylene glycol, phenolic resin, and epoxy resin. Preferred among these is methylcellulose.

Examples of the liquid dispersion medium include alcohols such as methanol and organic solvents such as benzene. Water may be used as a liquid dispersion medium other than the organic additives.

Any plasticizer may be used. Examples thereof include glycerin.

The lubricant is not particularly limited. Examples thereof include polyoxyalkylene-based compounds such as polyoxyethylene alkyl ether and polyoxypropylene alkyl ether. Specific examples of the lubricant include polyoxyethylene monobutyl ether and polyoxypropylene monobutyl ether.

The raw material composition contains silica. Any silica may be used. For example, various types of commercially available silica powder may be used. The average particle size of the silica powder is preferably 1 to 40 µm. The reason for adding silica to the raw material composition is to allow the silica to react with residual carbon in the degreased honeycomb molded body so as to remove the carbon and synthesize silicon carbide.

The molded body raw material is prepared by mixing the silicon carbide powder, the organic binder, the silica, and water as the liquid dispersion medium in a wet mixer. Materials such as the plasticizer and the lubricant may be added at this point, if necessary.

### (2) Molded body producing step

In the molded body producing step, the prepared molded body raw material is extruded into a honeycomb molded body.

In this step, the obtained molded body raw material is fed into an extruder and extruded into a rectangular pillar-shaped continuous body which is then cut in a predetermined length, thus producing a honeycomb molded body having a large number of through-holes arranged longitudinally in parallel to one another. The honeycomb molded body is dried by a dryer into a dried honeycomb molded body.

Next, a predetermined amount of plug material paste is placed at one end of each of the through-holes constituting the dried honeycomb molded body to plug the cells. When plugging the cells, for example, a cell plugging mask is placed on an end face of the honeycomb molded body (i.e., each cut face obtained by cutting both ends), and the plug material paste is placed only in the cells that need to be plugged. The plug material paste is then dried. Through these steps, the honeycomb molded body in which one end of each cell is plugged is produced.

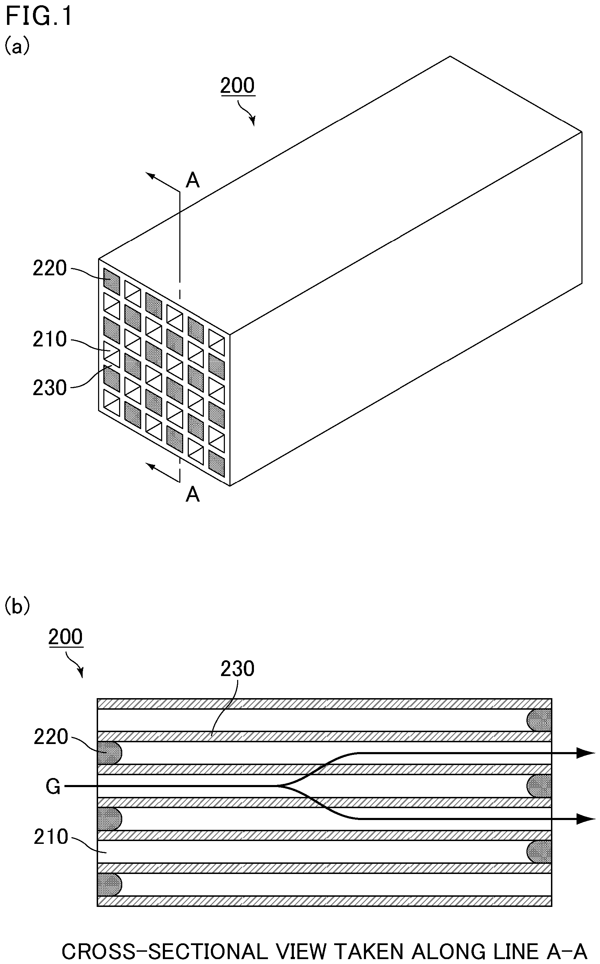

Fig. 1(a) is a schematic perspective view of a honeycomb molded body in which one end of each cell is plugged; and Fig. 1(b) is a cross-sectional view of the honeycomb molded body of Fig. 1(a) taken along line A-A.

As shown in Figs. 1(a) and 1(b), a produced honeycomb molded body 200 includes a large number of cells 210 arranged longitudinally in parallel to one another in which one end of each cell 210 is plugged with a plug 220 and a wall 230 is formed between the cells 210.

### (3) Degreasing step

Next, the honeycomb molded body 200 in which each cell is plugged is heated in a degreasing furnace for degreasing.

Conventionally, the degreasing step has been performed by heating at 300°C to 650°C in an oxygen-containing atmosphere to oxidatively decompose and completely remove the organic materials. However, in the method for producing a honeycomb filter of the present invention, the honeycomb molded body 200 is degreased by heating, for example, at 200°C to 650°C in a completely inert gas atmosphere.

The term "completely inert gas atmosphere" refers to an inert gas atmosphere completely free of oxygen, hydrogen, or the like. Examples thereof include an argon atmosphere and a nitrogen atmosphere. The organic additives are pyrolyzed in a completely inert gas atmosphere as described above.

Thus, when the organic additives contain hydrogen or oxygen in the compounds, the organic additives are pyrolyzed into hydrocarbons or oxides which are separated from the honeycomb molded body 200; however, some of the organic additives remain as carbon and carbon compounds in the honeycomb molded body 200. As described above, the heating in a completely inert gas atmosphere causes pyrolysis of the organic additives but is not likely to generate a large amount of heat. Thus, the thermal stress acting on the honeycomb molded body 200 during or after degreasing is small, and the degreased body is less susceptible to breakage or the like. Thus, the degreasing step can be easily controlled, and the honeycomb filter can be efficiently produced.

### (4) Firing step

After the degreasing step, the degreased honeycomb molded body 200 is fired in the firing step. The firing step is usually performed at 1400°C to 2200°C, preferably in a completely inert gas atmosphere.

Since the degreasing step is performed in a completely inert gas atmosphere, if the firing step is also performed in a completely inert gas atmosphere, the degreasing step and the firing step can be performed in the same gas atmosphere. This means that the degreasing step and the firing step can be performed in one batch furnace and that the degreasing step and the firing step can be performed in one continuous furnace provided with a degreasing area and a firing area.

The case where the degreasing step and the firing step are performed in one continuous furnace provided with a degreasing area and a firing area is described.

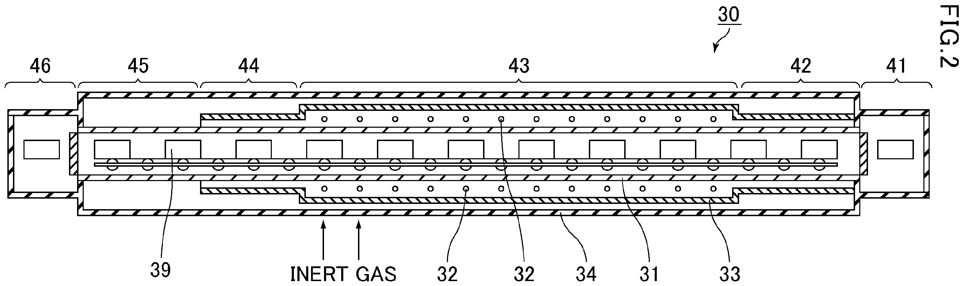

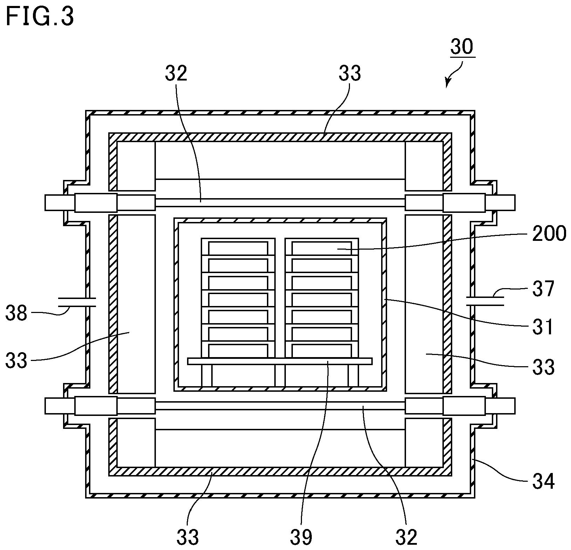

Fig. 2 is a schematic vertical sectional view of a continuous heating furnace according to the present invention, which is cut in a vertical plane along the longitudinal direction thereof. Fig. 3 is a schematic cross-sectional view of the continuous heating furnace according to the present invention, which is cut in a plane perpendicular to the longitudinal direction thereof.

As shown in Fig. 2, in a continuous heating furnace 30 according to the present invention, a deaeration area 41, a degreasing area 42, a firing area 43, a slow cooling area 44, a cooling area 45, and a deaeration area 46 are provided in this order from the inlet.

The deaeration area 41 is provided to change the atmosphere inside and around the honeycomb molded body 200 to be carried in. After the honeycomb molded body 200 is carried on a conveyance unit 39 or the like into the deaeration area 41, the deaeration area 41 is first vacuumed, and then inert gas is introduced, whereby the atmosphere inside and around the honeycomb molded body 200 is changed to an inert gas atmosphere.

In the degreasing area 42, the temperature of the honeycomb molded body 200 is increased to 200°C to 650°C by using heaters or with the heat of the firing area for pyrolysis of the organic additives in the honeycomb molded body 200. The heating step in the degreasing area 42 corresponds to the degreasing step.

Next, in the firing area 43, the temperature is further increased to 650°C or higher for firing the honeycomb molded body at 1400°C to 2200°C. The fired honeycomb molded body 200 is gradually cooled in the slow cooling area 44, and is further cooled to near room temperature in the cooling area 45. Then, after the honeycomb molded body 200 is carried into the deaeration area 46, the inert gas is replaced by air, and the honeycomb molded body 200 is carried out from the deaeration area 46. Thereby, a sequence of the degreasing treatment and the firing treatment of the honeycomb molded body 200 is completed.

Next, an example of the structure of the continuous heating furnace is described.

As shown in Fig. 2 and Fig. 3, in the continuous heating furnace 30, the degreasing area 42 and the firing area 43 where the honeycomb molded body 200 is degreased and fired, respectively, include a cylindrical muffle 31 formed to provide a space for accommodating the honeycomb molded body 200, heaters 32 provided at predetermined intervals above and below the muffle 31, an insulating material 33 provided so as to surround the muffle 31 and the heaters 32; and a refractory material 34 provided outside the insulating material 33. The atmosphere in the continuous heating furnace 30 is separated from the surrounding atmosphere by the refractory material 34.

As shown in Fig. 2, the heaters 32 are provided in the firing area 43 and, if necessary, in the degreasing area 42.

The muffle 31 is supported by a supporting member (not shown) at its entire bottom and is configured in such a manner that it can transfer the honeycomb molded body 200. The muffle 31 is provided in the entire region excluding the deaeration areas 41 and 46. A conveying means such as a conveyor belt may be provided inside the muffle 31. With the conveying means, the honeycomb molded body 200 can be automatically conveyed.

The insulating material 33 is provided in the degreasing area 42, the firing area 43, and the slow cooling area 44. In the firing area 43, the insulating material 33 is provided further outside the heaters 32 and is suitably fixed by fixtures. On the outermost side, the refractory material 34 is provided in the entire region excluding the deaeration area 41. The refractory material 34 is provided with a gas inlet tube 37 for filling the inside of the heating furnace with an inert gas and a gas exhaust tube 38 for discharging the inert gas.

The degreasing step and the firing step can also be performed in one batch furnace.

When the heating furnace is a batch furnace, the structure thereof is not much different from the structure of the continuous furnace. For example, a batch furnace can be constructed as follows: the heating furnace is formed in a box shape with the refractory material 34; only a portion used as the firing area 43 of the continuous heating furnace is placed inside; an openable door or the like is attached as a port for inlet and outlet; and the inside of the refractory material 34 is surrounded by an insulating material or the like.

After the honeycomb molded body 200 is carried into the batch furnace, an inert gas is introduced into the furnace and the temperature is gradually increased for degreasing, followed by a further increase in the temperature for firing, for example.

The case where the degreasing step and the firing step are performed in one batch furnace or one continuous furnace has been described, but the structure of the batch furnace or the continuous furnace is not limited to the one described above, and the batch furnace having a different structure or the continuous furnace having a different structure may be used.

The ratio (%) of the weight of the residual carbon in the honeycomb molded body 200 before reaction with the silica or the like in the degreasing step and the subsequent firing step to the total weight of the organic materials is herein referred to as the residual carbon ratio. The residual carbon ratio varies depending on the type of organic materials. Thus, the amount of residual carbon in the honeycomb molded body 200 can be adjusted by selecting the type and amount of the organic additives.

In the method for producing a honeycomb filter of the present invention, preferably, the molar ratio of carbon to silica (carbon/silica) in the degreased honeycomb molded body is 1 to 3.

As shown in the following reaction formula (1), 1 mole of silica reacts with 3 moles of carbon to synthesize 1 mole of SiC and generate 2 moles of CO gas at the same time.

SiO₂ + 3C = SiC + 2CO (1)

Thus, in order to prevent the carbon and the silica from remaining in the produced honeycomb filter, preferably, the silica is present in an amount of 60 g relative to 36 g of the carbon, provided that they react with each other in an ideal manner as shown in the reaction formula (1). Preferably, the molar ratio of carbon to silica (carbon/silica) is 1 to 3, considering the fact that actually the reaction of the silica with the carbon first produces SiO having a relatively low melting point and the SiO reacts with the carbon to produce SiC.

The raw material composition may contain an organic pore-forming agent as an organic additive for facilitating the control of the porosity of the honeycomb filter to be produced. In the degreasing step, a portion of the organic pore-forming agent is also converted into carbon, and the carbon reacts with the silica, thus producing SiC. In addition, a portion of the carbon is converted into CO by the reaction with the silica and the CO is separated from the honeycomb molded body, resulting in the formation of pores. Examples of the organic pore-forming agent include spherical acrylic particles and graphite.

Through the degreasing step and the firing step, a porous honeycomb fired body can be produced. The structure of the honeycomb fired body is basically the same as that of the honeycomb molded body 200 shown in Fig. 1.

When producing a honeycomb filter using the honeycomb fired bodies obtained above, a sealing material paste is applied to lateral sides of each honeycomb fired body to form a sealing material paste layer, and these honeycomb fired bodies are sequentially stacked on one another with the sealing material paste layer therebetween. This procedure is repeated to produce an aggregate of a predetermined number of the honeycomb fired bodies that are combined together. The sealing material paste may be a mixture of an inorganic binder, an organic binder, and inorganic fibers and/or inorganic particles, for example.

Next, the aggregate of the honeycomb fired bodies is heated to solidify the sealing material paste layer by drying into a sealing material layer (adhesive layer). Subsequently, the aggregate of the honeycomb fired bodies is cut with a diamond cutter or the like into a ceramic block. The sealing material paste is applied to the outer periphery of the ceramic block and solidified by drying into a coat layer, whereby a honeycomb filter can be produced.

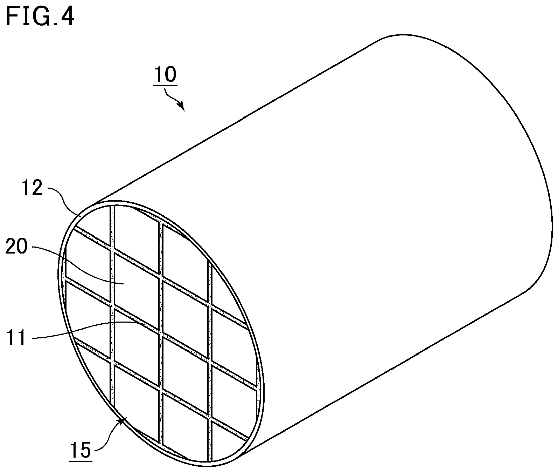

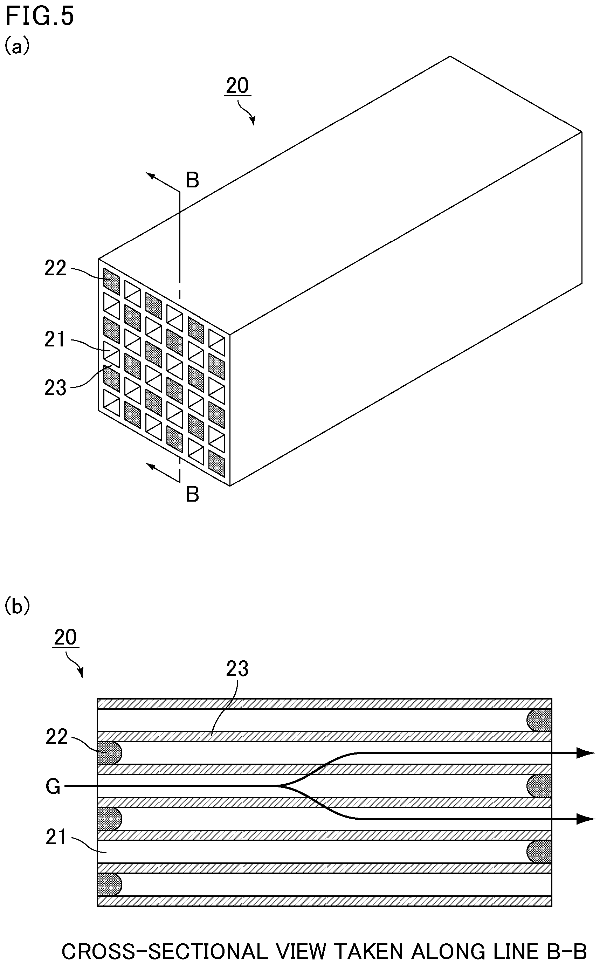

Fig. 4 is a perspective view of a honeycomb filter produced by the method for producing a honeycomb filter of the present invention. Fig. 5(a) is a perspective view of the honeycomb fired body that constitutes the honeycomb filter of Fig. 4; and Fig. 5(b) is a cross-sectional view of the honeycomb fired body of Fig. 5(a) taken along line B-B.

As shown in Fig. 4, a honeycomb filter 10 of the present invention includes a round pillar-shaped ceramic block 15 in which multiple porous honeycomb fired bodies 20 made of silicon carbide are combined with one another with an adhesive layer 11 therebetween. The ceramic block 15 includes a coat layer 12 formed therearound.

In the honeycomb filter 10 shown in Fig. 4, the ceramic block has a round pillar shape. Yet, in the present invention, the shape of the ceramic block is not limited to the round pillar shape as long as it is a pillar shape. It may be any other shape such as a cylindroid shape or a rectangular pillar shape.

The honeycomb fired body 20 is produced by degreasing and firing the honeycomb molded body 200 shown in Fig. 1(a) and 1(b). A large number of cells 21 are longitudinally arranged in parallel to one another, and one of the ends of each cell 21 is plugged. Thus, each cell partition wall 23 separating the cells 21 from each other functions as a filter. Specifically, as shown in Fig. 5(b), each cell 21 formed in the honeycomb fired body 20 is plugged with a plug 22 at one end on the exhaust gas inlet side or the exhaust gas outlet side. Exhaust gas that has flowed into one of the cells 21 inevitably passes through the cell partition wall 23 separating the cells 21 from each other, and then flows out from another cell 21.

The honeycomb filter having the structure described above captures PM such as soot contained in exhaust gas emitted from an internal combustion engine and can thus purify the exhaust gas.

The residual carbon from the degreasing treatment in a completely inert gas atmosphere reacts with the silica and is thus converted into silicon carbide in the firing step. The synthesized silicon carbide tends to aggregate in a neck portion where silicon carbide particles are bonded to each other, and plays the role of improving the mechanical characteristics of the produced honeycomb fired body.

As described above, in the method for producing a honeycomb filter of the present invention, the degreasing step is performed in a completely inert gas atmosphere. Thus, the organic additives including an organic binder are less likely to be oxidatively decomposed, and are mainly pyrolyzed. Consequently, a large amount of heat is not likely to be generated, the thermal stress acting on the honeycomb molded body during or after degreasing is small, and the degreased body is less susceptible to problems such as breakage. Thus, the degreasing step can be easily controlled, and the honeycomb filter can be efficiently produced.

In addition, the degreasing step and the firing step can be performed in one furnace, enabling a significant reduction in the required amount of heat. Thus, the honeycomb filter can be produced at lower cost. Moreover, there is no need to take out the degreased body from the degreasing furnace for cooling and then to carry it to the firing furnace. Thus, the process can be simplified, the risk of breaking the honeycomb molded body during transportation is eliminated, and the honeycomb filter can be produced efficiently.

### EXAMPLES

Examples that more specifically disclose embodiments of the present invention are described below. The present invention, however, is not limited to these examples.

### (Example 1)

### (1) Production of honeycomb fired body

First, in the molded body raw material preparing step, a mixture was obtained by mixing 52.0% by weight of silicon carbide coarse powder having an average particle size of 22 µm and 22.2% by weight of silicon carbide fine powder having an average particle size of 0.5 µm. To the mixture were added 3.9% by weight of an organic binder (methylcellulose), 2.3% by weight of a lubricant (UNILUB available from NOF Corporation), 1.0% by weight of glycerin, 6.5% by weight of silica powder, and 12.1% by weight of water. The resulting mixture was kneaded into a molded body raw material.

In the subsequent molded body producing step, the molded body raw material obtained above was extruded into a raw honeycomb molded body. Next, the raw honeycomb molded body was dried using a microwave dryer into a dried honeycomb molded body.

Subsequently, a plug material paste was placed in predetermined cells of the dried honeycomb molded body to plug the cells, thus obtaining a honeycomb molded body with plugged cells shown in Fig. 1(a) and 1(b). The molded body raw material was used as the plug material paste. After plugging the cells, the dried honeycomb molded body including the plug material paste was dried again by the dryer.

Subsequently, multiple dried honeycomb molded bodies were placed on a conveyance unit and carried into a batch furnace, and nitrogen was introduced into the furnace. Once the temperature was raised to 400°C in a nitrogen atmosphere under normal pressure, the heating was stopped for degreasing. Then, argon was introduced into the same batch furnace to replace the nitrogen gas by the argon gas without moving the degreased honeycomb molded body, and the degreased honeycomb molded body was fired at 2200°C in an argon atmosphere under normal pressure for three hours, whereby a honeycomb fired body was produced.

In this case, 0.1% of the honeycomb fired bodies were broken at the stage where they were taken out from the firing furnace.

Each obtained honeycomb fired body was formed of a porous silicon carbide sintered body. The porosity was 42%, the average pore diameter was 9 µm, the size was 34.3 mm × 34.3 mm × 150 mm, the number of cells (cell density) was 31 pcs/cm² (200 pcs/inch²), the cell partition wall thickness was 0.1016 mm, and the outer wall thickness was 0.3 mm.

### (2) Production of honeycomb filter

The honeycomb fired bodies obtained through the above steps were used to produce a honeycomb structured body.

An adhesive material paste was applied to predetermined lateral sides of each honeycomb fired body, and 36 (6 pieces vertically × 6 pieces transversely) honeycomb fired bodies were bonded together with the adhesive material paste therebetween, whereby an aggregate of the honeycomb fired bodies was produced.

Further, the aggregate of the honeycomb fired bodies was heated at 180°C for 20 minutes to solidify the adhesive material paste by drying, whereby a rectangular pillar-shaped ceramic block having a 1-mm-thick adhesive layer was produced.

Subsequently, the periphery of the rectangular pillar-shaped ceramic block was cut with a diamond cutter to produce a round pillar-shaped ceramic block having a diameter of 198 mm.

Next, a peripheral coat material paste was applied to the periphery of the round pillar-shaped ceramic block, and the peripheral coat material paste was solidified by heating at 120°C to form a 1.0-mm-peripheral coat layer on the periphery of the ceramic block. The adhesive material paste was used as the peripheral coat material paste.

Through the above steps, a honeycomb filter having a diameter of 200 mm × a length of 150 mm was produced.

### (Example 2)

A honeycomb fired body was produced in the same manner as in Example 1, except that in the molded body raw material preparing step, a mixture was obtained by mixing 39.8% by weight of silicon carbide coarse powder having an average particle size of 22 µm and 17.1% by weight of silicon carbide fine powder having an average particle size of 0.5 µm; to the mixture were added 4.9% by weight of an organic binder (methylcellulose), 12.3% by weight of starch (pore-forming agent), 2.0% by weight of a lubricant (UNILUB available from NOF Corporation), 1.4% by weight of glycerin, 6.3% by weight of silica powder, and 16.2% by weight of water; and the resulting mixture was kneaded into a molded body raw material.

In this case, 0.1% of the honeycomb fired bodies were broken at the stage where they were taken out from the firing furnace.

### (Comparative Example 1)

### (1) Production of honeycomb fired body

First, a mixture was obtained by mixing 54.5% by weight of silicon carbide coarse powder having an average particle size of 22 µm and 23.4% by weight of silicon carbide fine powder having an average particle size of 0.5 µm. To the mixture were added 4.3% by weight of an organic binder (methylcellulose), 2.6% by weight of a lubricant (UNILUB available from NOF Corporation), 1.2% by weight of glycerin, and 14.0% by weight of water. The resulting mixture was kneaded into a molded body raw material.

Then, the obtained molded body raw material was extruded into a raw honeycomb molded body. Next, the raw honeycomb molded body was dried by a microwave dryer into a dried honeycomb molded body. Subsequently, a plug material paste was placed in predetermined cells of the dried honeycomb molded body to plug the cells, thus obtaining a honeycomb molded body with plugged cells shown in Fig. 1(a) and 1(b). The molded body raw material was used as a plug material paste. After plugging the cells, the dried honeycomb molded body including the plug material paste was dried again by the dryer.

Next, each honeycomb molded body was carried on a conveyance unit into the degreasing furnace for degreasing at 400°C in air (degreasing treatment). The degreased honeycomb molded body was cooled in the degreasing furnace, carried out from the degreasing furnace, and carried into the firing furnace. Then, the degreased honeycomb molded body was fired at 2200°C in an argon atmosphere under normal pressure for three hours, whereby a honeycomb fired body was produced.

During the period from when each degreased honeycomb molded body was carried out from the degreasing furnace until it was carried into the firing furnace, 0.3% of the degreased honeycomb molded bodies were broken at the stage where they were carried out from the degreasing furnace, additional 0.5% of the degreased honeycomb molded bodies were broken during the period from when they were carried out from the degreasing furnace until they were carried into the firing furnace, and further additional 0.1% of the honeycomb fired bodies were broken at the stage where they were taken out from the firing furnace. The total breakage percentage of the honeycomb fired bodies was 0.9%.

The obtained honeycomb fired body was formed of a porous silicon carbide sintered body. The porosity was 42%, the average pore diameter was 9 µm, the size was 34.3 mm × 34.3 mm × 150 mm, the number of cells (cell density) was 31 pcs/cm² (200 pcs/inch²), the cell partition wall thickness was 0.1015 mm, and the outer wall thickness was 0.3 mm.

### (2) Production of honeycomb filter

A honeycomb filter was produced in the same manner as in Example 1, using the honeycomb fired bodies obtained through the above steps.

### (Evaluation)

The time required from degreasing to firing was significantly reduced to about 48% in Example 1 as compared to Comparative Example 1. The electric power consumption was also significantly reduced to about 67% in Example 1 as compared to Comparative Example 1.

### REFERENCE SIGNS LIST

10 honeycomb filter
11 adhesive layer
12 coat layer
15 ceramic block
20 honeycomb fired body
21 cell
22 plug
23 cell partition wall
30 continuous heating furnace
31 muffle
32 heater
33 insulating material
34 refractory material
37 gas inlet tube
38 gas exhaust tube
39 conveyance unit
41, 46 deaeration area
42 degreasing area
43 firing area
44 slow cooling area
45 cooling area
200 honeycomb molded body
210 cell
220 plug
230 wall

## Claims

1. A method for producing a honeycomb filter, the method comprising:
a molded body raw material preparing step of mixing silicon carbide powder, organic additives at least including an organic binder, and silica to prepare a raw material composition as a molded body raw material;
a molded body producing step of extruding the prepared molded body raw material into a honeycomb molded body;
a degreasing step of degreasing the produced honeycomb molded body; and
a firing step of firing the degreased honeycomb molded body,
wherein the degreasing step is performed in a completely inert gas atmosphere.

2. The method for producing a honeycomb filter according to claim 1,
wherein the firing step is performed in a completely inert gas atmosphere.

3. The method for producing a honeycomb filter according to claim 1 or 2,
wherein the molar ratio of carbon to silica (carbon/silica) in the degreased honeycomb molded body is 1 to 3.

4. The method for producing a honeycomb filter according to any one of claims 1 to 3,
wherein the degreasing step and the firing step are performed in one batch furnace.

5. The method for producing a honeycomb filter according to any one of claims 1 to 3,
wherein the degreasing step and the firing step are performed in one continuous furnace, and the continuous furnace comprises a degreasing area and a firing area.

6. The method for producing a honeycomb filter according to any one of claims 1 to 5,
wherein the organic additives further include an organic pore-forming agent.
